Europäisches Patentamt

European Patent Office

Office européen des brevets

(11) Publication number: **0 236 111**
**A2**

# EUROPEAN PATENT APPLICATION

(21) Application number: **87301804.8**

(22) Date of filing: **02.03.87**

(51) Int. Cl.⁴: **G 09 G 3/20**

(30) Priority: **03.03.86 JP 45880/86**
**27.06.86 JP 150922/86**

(43) Date of publication of application:
**09.09.87 Bulletin 87/37**

(84) Designated Contracting States:
**CH DE FR GB IT LI**

(71) Applicant: **SEIKO INSTRUMENTS INC.**
**31-1, Kameido 6-chome Koto-ku**
**Tokyo (JP)**

(72) Inventor: **Kondo, Kenichi**
**31-1 Kameido 6-chome**
**Koto-ku Tokyo (JP)**

(74) Representative: **Caro, William Egerton et al**
**J. MILLER & CO. Lincoln House 296-302 High Holborn**
**London WC1V 7JH (GB)**

(54) Interface for a thin colour display panel.

(57) An interface for a thin colour display panel 111 receives a clock signal CK, horizontal and vertical synchronisation signals Hsyc and Vsyc, and serial colour display data DR, DG and DB. An X-axis display area control circuit 101 receives Hsyc signals which are clocked by CK signals to a pulse generator 103. A Y-axis display area control circuit 102 receives both Hsyc and Vsyc signals and provides an output to generator 103. The generator 103 is clocked by CK signals to give an output to an RAM control circuit 104 when outputs from circuits 101 and 102 are present simultaneously. The RAM control circuit 104 is clocked by CK signals and by timing signals from a generator 109 to introduce the colour display data into RAM memories 105, 106 and 107. Colour display data stored in the RAM memories is extracted by a colour data treating circuit 108 to generate desired mixed colour data for an X-axis electrode driver 112. The timing signal generator 109 clocked by CK signals generates timing signals necessary for operating the driver 112 and a Y-axis electrode driver 110 for the thin colour display panel 111.

FIG.1

## Description

"INTERFACE FOR THIN COLOUR DISPLAY PANEL"

The present invention relates to interfaces for thin colour display panels, for example, liquid crystal displays, EL displays, plasma displays and LED displays. More particularly, the present invention relates to such an interface which can be used with a compact and lightweight display device employing the interface signals of CRT displays that have gained a wide application, particularly in personal computers.

Such an interface according to the invention can play the role of a colour display interface in the same driving circuit construction as those of prior art devices by utilizing interface signals of a CRT display, storing independent colour display data in independent memories and converting the display data into mixed display data of red, green and blue at the time of read-out.

Liquid crystal display devices have the characteristics that they are thin, operate at a low voltage and consume little power. Therefore, they have been proposed for practical use recently in display terminal devices of personal computers, word processors, and the like, using a large dot matrix panel. Nowadays LSI circuits that can be connected directly to CRT interfaces as portable computers have been developed and manufacturers of various office automation equipment have produced interface circuits that are used exclusively for liquid crystal display devices, by means of gate arrays. For these reasons, there exist vigorous demands for the liquid crystal display devices. Although these liquid crystal dispay devices have a display capacity, as such of 640 × 200 dots that can replace CRT, they are generally monochromic display and are not sufficient in terms of display information quantity when used for graphic illustration. In addition, they are not sufficiently attractive because they merely display ON-OFF by utilizing one or two of red, green and blue displays for a display panel of the simple matrix.

It is therefore an object of the invention to provide an improved interface for a thin display. Another object of the invention is to provide an interface circuit that can make a multi colour display and can be applied to flat display devices by utilizing interface signals of colour CRTs.

According to the invention, therefore, an interface for video colour display signals to a thin colour display panel, is characterised by timing means for controlling the introduction of effective colour display data into memory means according to synchronization signals, the memory means being effective to store the colour display data, colour data treating means for generating desired mixed colour data from stored colour display data, and timing signal generating means to generate timing signals necessary to operate a driver for the thin colour display panel.

According to another aspect of the invention an interface for video-colour display signals to a thin colour display panel with first and second dot matrix electrode constructions is characterised by timing means for controlling the introduction of effective colour display data into memory means according to synchronization signals, the memory means comprising a first memory means for storing the effective colour display data for the first dot matrix electrode construction and a second memory means for storing the effective colur display data for the second dot matrix electrode construction, first and second colour data treating means for generating first and second desired mixed colour data using the stored colour display data, and timing signal generating means to generate timing signals necessary to operate a driver for the thin colour display panel.

Other necessary and preferred features of the invention will become apparent from the following description, given by way of example only and with reference to the accompanying drawings, in which:-

Figure 1 is a block diagram showing one embodiment of interface according to the present invention;

Figure 2 is a block diagram showing another embodiment of interface according to the invention;

Figure 3 is a plan view showing electrode construction for a multi colour LC panel used with any of the described embodiments;

Figure 4 is a timing chart of display data from the interface of Figure 2;

Figure 5 is a timing chart of interface signal to the driver of Figure 2;

Figure 6 is a block diagram showing a particular embodiment of part of the interface of Figure 2;

Figures 7, 8 and 9 are block diagrams showing three other embodiments of interface according to the invention;

Figure 10 is a block diagram showing an embodiment of part of the circuit of Figure 9;

Figure 11 is a timing chart for the control circuit of Figure 10;

Figure 12 is a block diagram showing another embodiment of interface according to the invention;

Figure 13 is a timing chart for the circuit shown in Figure 12;

Figure 14 is a block diagram showing part of an X-axis electrode driver for the embodiment of Figure 12; and

Figure 15 shows a driving waveform for the driver of Figure 14.

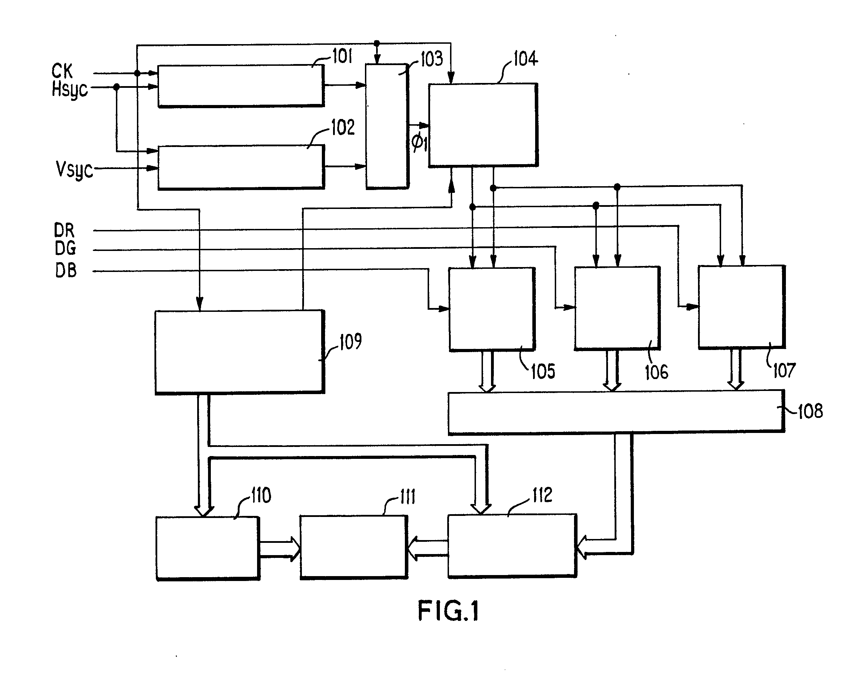

In an embodiment of colour liquid crystal display in accordance with the present invention, illustrated in Figure 1, an X-axis display area control or home position regulating circuit 101 receives clock signals CK and horizontal sync signals Hsyc, and is a control circuit that counts the clock signals CK and determines the display area in the X-axis direction.

A Y-axis display area control or home position regulating circuit 102 receives horizontal sync signals Hsyc and vertical sync signals Vsyc, and is a control circuit that counts the horizontal sync signals Hsyc and determines the display area in the Y-axis direction.

A pulse generator 103 receives the outputs of the circuits 101 and 102 and the clock signals CK, and is a circuit for generating a clock signal $\varphi_1$ necessary for writing display data when both the circuits 101 and 102 are effective, i.e., after the blanking period. A RAM control circuit 104 receives clock signals CK, the clock signal $\varphi_1$ and a read timing signal from a timing signal generator 109, and is a circuit for generating an address signal, a write signal and a read signal necessary for writing or reading RAM memories 105, 106 and 107. These RAM memories 105, 106 and 107 in turn are circuits for storing video colour display data signals DB, DG and DR, respectively. A colour data mixing processor 108 is a circuit for rearranging the data read from the RAM memories in the order of red, green and blue colours to transform them into mixed colour data signals. The timing signal generator 109 is a circuit for generating a timing signal necessary for driving a Y-axis driver 110 and an X-axis driver 112 of a colour panel.

In operation, when the outputs of both circuits 101 and 102 are at the "H" level, i.e. when the horizontal and vertical synchronizing blanking periods elapse, the pulse generator 103 inputs the clock signal $\varphi_1$ to the RAM control circuit 104 and the colour display data signals DB, DG and DR are written in units of eight bits into the RAM memories 105, 106 and 107, respectively. The written colour display data signals are made readable for the period other than the writing period and input to the colour data mixing processor 108. This colour data mixing processor 108 transforms the red, green and blue data signals into one unit of mixed colour data signals and inputs them to the X-axis driver 112 to drive the X-electrodes of a colour panel 111. The timing signal generator 109 generates both the timing signal necessary for driving the X-axis driver 112 and Y-axis driver 110 and the read timing signal for reading the RAM memories 105, 106 and 107. The X-axis driver 112 can drive the X-electrodes of the colour panel 111 on the basis of the display output data of the colour data mixing processor 108, whereas the Y-axis driver 110 can drive the Y-electrodes of the colour panel 111 to display an image or a character.

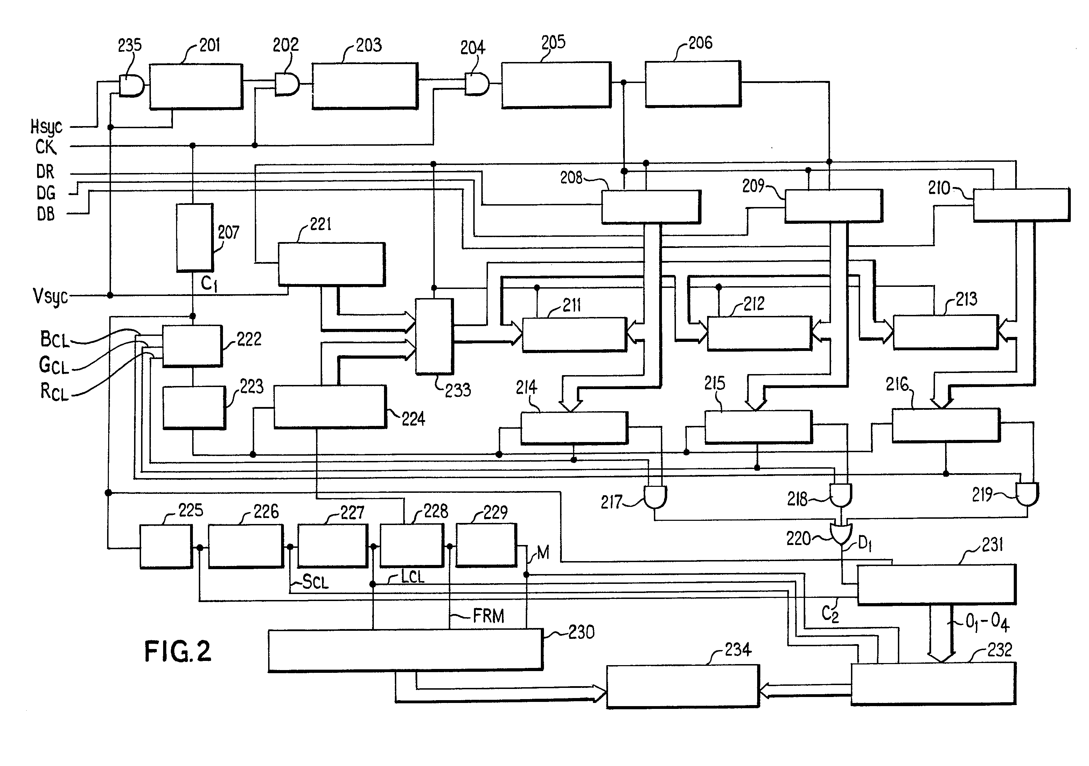

In another embodiment of the present invention, illustrated in Figure 2, a Y-axis display area control circuit 201 receives the output of an AND gate 235 whose inputs are signals Hsyc and Vsyc. The output signal of the Y-axis effective display area time is one input to an AND gate 202, whose other input is clock signal CK. The output of AND gate 202 is to X-axis display area control circuit 203 whose output of the X-axis effective display area time signal is one input of an AND gate 204. The other input of the AND gate 204 is clock signal CK and its output is to a sampling pulse generation circuit 205.

The sampling pulse generation circuit 205 divides the frequency of the clock signal CK in a display area period and supplies an output sampling pulse to a latch pulse generation circuit 206 and to three serial-to-parallel conversion circuits 208, 209. The circuit 206 divides the frequency of the sampling pulses and supplies a latch signal to the circuits 208, 209 and 210, and to a write address counter 221, a selection circuit 233 and three RAM memories 211, 212 and 213. The circuits 208, 209 and 210 receive red, green and blue serial video display data signals DR, DG and DB, respectively, and convert them into parallel data signals. The red, green and blue parallel data signals are stored in RAM memories 211, 212 and 213 respectively, and parallel-to-serial conversion circuits 214, 215 and 216 convert the parallel data from the RAM memories 211, 212 and 213 respectively to serial data, AND gates 217, 218 and 219 and an OR gate 220 selectively and sequentially take out the outputs of the circuits 214, 215 and 216 and produce serial data as a mixture of red, green and blue display data signals $D_1$. A serial-to-parallel conversion circuit 231 converts the serial mixed display data to parallel outputs $O_1$ to $O_4$ of mixed colour display data.

The write address counter 221 is reset by the vertical sync signal Vsyc and then counts the write addresses of the RAM memories 211, 212 and 213. The latch pulse generation circuit 206 generates a latch pulse whenever it counts eight sampling pulses of the sampling pulse generation circuit 205 and latches the registers of the circuits 208, 209 and 210.

A read address counter 224 is a counter circuit for the read-out address of the RAM memories 211, 212 and 213. The selection circuit 233 is a circuit that changes over the address line by writing or reading the addresses of the RAM memories 211, 212 and 213 from the counters 221 and 224. A frequency division circuit 207 divides the frequency of the clock signal CK to a lower frequency and supplies an output $C_1$ to a ring counter 222, a quarter counter 225 and to the serial-to-parallel conversion circuit 231. The ring counter 222 consists of a ternary ring counter and generates selection pulses RCL, GCL and BCL for the circuit 214 and AND gate 217, the circuit 215 and AND gate 218, and the circuit 216 and AND gate 219, respectively, in order to obtain the mixed serial display data from the selection gate 220 by sequentially taking out the red, green and blue display data of the circuits 214, 215 and 216. An eighth counter 223 generates one latch signal whenever eight pulses of the carry signals of the ring counter 222 are input. The generated latch signal is supplied to latch the display data of the counter input signal of the read address counter 224 and the display data of the circuits 214, 215 and 216.

The quarter counter 225 supplies a latch signal $C_2$ to the circuit 231 whenever four output pulses of the frequency division circuit 207 are input and to a shift clock generator 226 which generates a shift clock signal SCL for a shift register of the 4-bit parallel type incorporated in an X-axis electrode driving circuit 232. The signal SCL is supplied to a latch clock generator 227 which generates a latch signal LCL for latching the data of the X-axis electrode driving circuit 232 and of a Y-axis electrode driving circuit 230. The latch signal LCL is supplied to a frame signal generation circuit 228 which generates a frame signal FRM to the Y-axis electrode driving circuit 230. The signal FRM is supplied to an AC-converting signal circuit 229 which generates a signal M to change the polarity of the driving signals for the driving circuits 232 and 230 in order to drive a colour liquid crystal panel 234 by AC. The colour liquid crystal panel 234 has transparent X-axis electrodes to sequential groups of three of which red, green and blue filters are applied. The X-axis electrode driving circuit 232 drives the X-axis electrodes of the liquid crystal panel 234 while the Y-axis electrode driving circuit drives the Y-axis electrodes.

In operation, the Y-axis display area control circuit 201 receives Hsyc as its input and outputs a signal of the Y-axis effective display area time to the AND gate 202. The clocked output of the AND gate 202 is input to the X-axis display area control circuit 203, which outputs the signal of the X-axis effective area display area time to the AND gate 204. Here, because both the Y-axis display area control circuit 201 and the X-axis display area control circuit 203 consists of variable counters, the effective display ranges for the colour liquid crystal panel in the X- and Y directions can be set arbitrarily. The output of the AND gate 204 is the clock signal in the effective display area in which the display data DR, DG and DB are effective.

The sampling pulse generation circuit 205 divides the frequency of the output of the AND gate 204 by four to generate the sampling pulse used as the shift clock of the conversion circuits 208, 209 and 210. The latch pulse generation circuit 206 divides the frequency of the sampling pulse of the sampling pulse generation circuit 205 by eight and produces the latch signal to the conversion circuits 208, 209 and 210.

As this latch pulse is input as the write control signal to the write address counter 221, and to the selection circuit 233 and the RAM memories 211, 212 and 213, the 8-bit parallel signals of the conversion circuits are sampled to predetermined addresses and are simultaneously stored in the RAM memories 211, 212 and 213. Whenever these signals are stored, the write address counter 221 is incremented by the latch pulse of the latch pulse generation circuit 206 and the display data are sequentially stored at the predetermined addresses.

When no latch pulse output of the latch pulse generation circuit 206 exists, the selection circuit 233 selects the count output of the read address counter 224 and the RAM memories 211, 212 and 213 are in the read mode.

The display data of RAM memories 211, 212 and 213 addressed by the output of the read address counter 224 are input to the conversion circuits 214, 215 and 216. The display data are latched into the conversion circuits 214, 215 and 216 by the output of the eight divider 223.

The frequency division signal $C_1$, generated by the frequency division circuit 207 is input to the ring counter 222, whose outputs are used as shift clock signals for the conversion circuits 214, 215 and 216. Accordingly, the serial output signals of the conversion circuits 214, 215 and 216 are input regularly and sequentially to the AND gates 217, 218, 219 together with the shift clock signal of the ring counter. Thus the OR gate 220 of the selection gate circuit outputs serial data which is a mixture of the display data of red, green, blue, red..., blue. The mixed red, green and blue serial data are input to the conversion circuit 231. The output after division of the frequency by four by the signal $C_2$ from the quarter counter 225 is input as the latch signal to the conversion circuit 231 so that this conversion circuit 231 converts the display data into parallel data such as (red, green, blue, red), (green, blue, red, green), (blue, red, green, blue), (red, green, blue, red).... and so forth.

The shift clock generator 226 generates the shift clock signal SCL by delaying the output signal of the quarter counter 225 in order to supply the shift clock signal SCL to the 4-bit parallel shift register type of the X-axis electrode driving circuit 232 for the display data of the conversion circuit 231.

The latch clock generator 227 generates the latch signal LCL in order to latch the display data of the 4-bit parallel shift register of the driving circuit 232. When the display data of the X-axis electrodes are shifted to its end, the latch clock generator 227 generates the latch clock, whereby the display data are simultaneously latched and the X-axis electrodes are driven at the same time. Furthermore, the display data of the Y-axis electrodes are shifted, and the shift clock signal for driving the next Y-axis electrode is generated. The frame signal generation circuit 228 generates the frame signal FRM which becomes the display data of the Y-axis electrode driving circuit 230, and produces the display data for selecting the first Y-axis electrode by dividing the frequency of the latch clock generator 227. Furthermore, the frame signal generation circuit 228 clears the output of the read address counter 224 to zero and generates the reset pulses for turning the addresses of the RAM memories 211, 212 and 213 to the zero address.

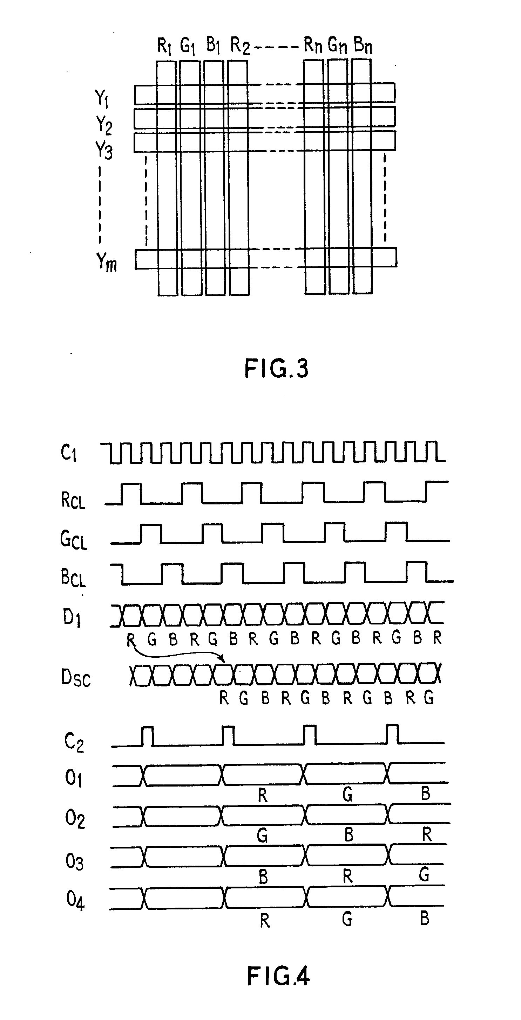

Figure 3 is a diagram showing the electrode construction of a colour liquid crystal panel used in the present invention. There are m Y-axis electrodes $Y_1$, $Y_2$, $Y_3$ - - and $Y_m$ and n groups, each of three X-axis electrodes $G_1$ and $B_1$, $R_2$, $G_2$ and $B_2$, - - -, and $R_n$, $G_n$ and $B_n$. The X-axis electrodes have colour filters applied thereto, each group being of red, green and blue colours. The intersections between the X-axis electrodes and Y-axis electrodes provide colour display dots.

The output pulses $R_{CL}$, $G_{CL}$ and $B_{CL}$ of the ring counter 222 are timed from the output $C_1$ of the divider 207, and the red, green and blue display data are extracted from the converters 214, 215 and 216. in a time sharing manner by the selection gate circuit comprising the OR gates 217, 215, 219 and 220. As a result, the OR gate 220 outputs the display data signals $D_1$ of R(red), G(green) and B(blue) colours sequentially, as shown in the timing chart of Figure 4. The display data signals $D_1$ are latched by the output signal $C_2$ of the quarter counter 225 after they have been shifted four bits (to $D_{SC}$) by output $C_1$ to the shift clock of the conversion circuit 231. As a result, the 4-bit parallel outputs $0_1$ to $0_4$ of the conversion circuit 231 outputs the mixed colour display data, so that: the output $0_1$ is in the order R, G and B; the output $0_2$ in the order G, B and R; the output $0_3$ in the order of B, R and G; and the output $0_4$ in the

order R, G and B, as shown in Figure 4.

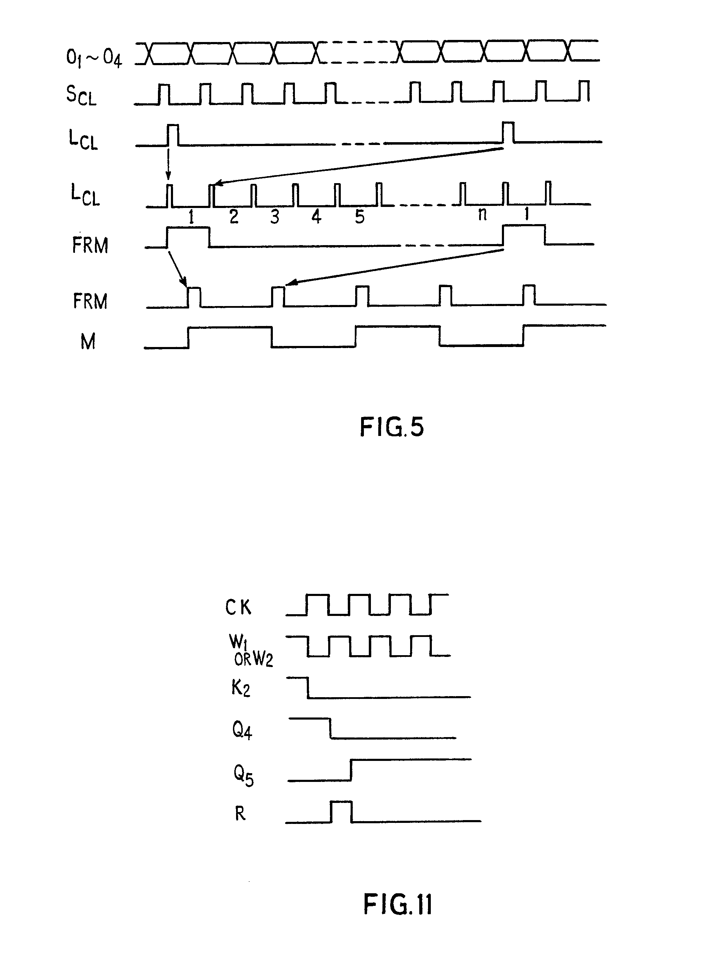

Figure 5 is a timing chart showing interface signals to the liquid crystal driving circuits. The mixed colour display data outputs of $0_1$ to $0_4$ of the conversion circuit 231 are timed by signals $C_2$ (Figure 4), whilst shift clock signals $S_{CL}$ delayed therefrom by the generator 226 are supplied to the 4-bit parallel shift register of the X-axis electrode driving circuit 232. The latch signals $L_{CL}$ are derived from signals $S_{CL}$ by the generator 227 to provide the latch signal of the latch circuit of the X-axis driving circuit 231 and the shift clock of a shift register in the Y-axis driving circuit 230. The lower line of $L_{CL}$ is to a shortened time scale and shows how after n signals $L_{CL}$, a frame signal FRM is generated by the circuit FRM. The signal FRM denotes scan starting data for starting the scanning of the Y-axis driving circuit 230. The lower line of FRM is to a further shortened time scale and shows how at each signal FRM, the signal M obtained by halving the signal FRM, reverses polarity being the output signal of the AC-conversion signal generation circuit 229.

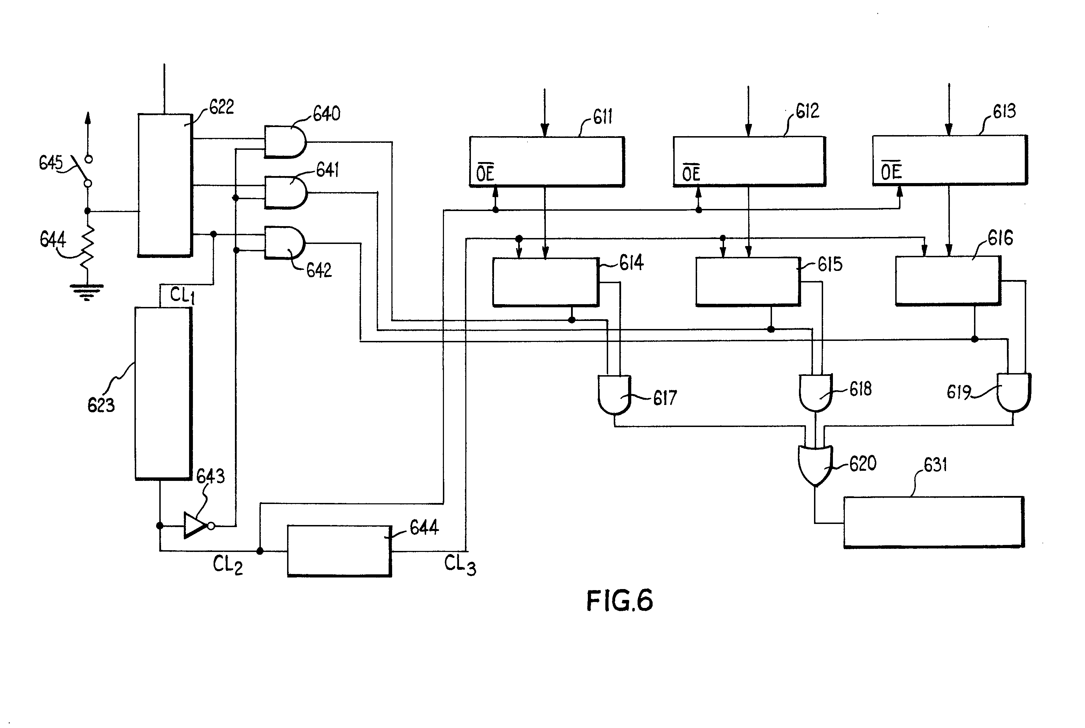

In a modification (Figure 6) of the embodiment illustrated in Figure 2, a switch 645 is used as a change-over switch for converting the counted value of a ring counter 622 (replacing the counter 222) into a binary or ternary value. A resistor 646 is a pull-down resistor. RAM memories 611, 612 and 613 replace RAM memories 211, 212 and 213, and have their parallel data latched by parallel-to-serial converters 614, 615 and 616, replacing the circuits 214, 215 and 216. The counted ternary output of the ring counter 622 passes through AND gates 640, 641 and 642 to produce shift clock signals for the converters 614, 615 and 616 to transfer their data sequentially and serially through AND gates 617, 618 and 619 (replacing AND gates 217, 218 and 219) and an OR gate 620 (replacing OR gate 220) to a serial-to-parallel conversion circuit 631 (replacing circuit 231). The output $CL_1$ of the ring counter 622 is input to a ninth counter 623 to output one pulse each time nine outputs $CL_1$ of the ternary counter is counted. The output $CL_2$ of the counter 623 is passed through an inverter 643 to the other inputs of the AND gates 640, 641 and 642. As a result, with no output, the AND gates 640, 641 and 642 are open to send the shift clock to the converters 614, 615 and 616 but are closed at the ninth count. At the same time, the output $CL_2$ of the ninth counter 623 is input to the RAM memories 611, 612 and 613 so that these are simultaneously output to the converters 614, 615 and 616. The output $CL_2$ of the ninth counter is delayed by a delay circuit 644 to provide an output $CL_3$ to the converters 614, 615 and 616. This output $CL_3$ causes the parallel data of the RAM memories 611, 612 and 613 to latch new data in the converters. Thus, the 8-bit parallel data of the RAM memories 611, 612 and 613 are transferred during the period of one ternary ring counter output $CL_1$, each time eight shots of shift clock from the AND gate 642 are input to the AND gate 619 to complete the shifting operation. Although the description thus far made is directed to the example of a ternary ring counter, the ring counter 622 can operate in an analogous manner as a binary ring counter when the switch 645 is turned on.

The output of the OR gate 620 of the selecting gate circuit is the serial data in which the display data of red, green and blue display data are mixed. These serial data are input to the converter 631. Because the output $C_2$ (not shown in Figure 6) from the quarter counter 225 (Figure 2) is input as the latch of the converter 631, this converter 631 transforms the display data in parallel such that (red, green and blue, red), (green, blue, red, green), (blue, red, green, blue), (red, green, blue, red) - - -, and so on.

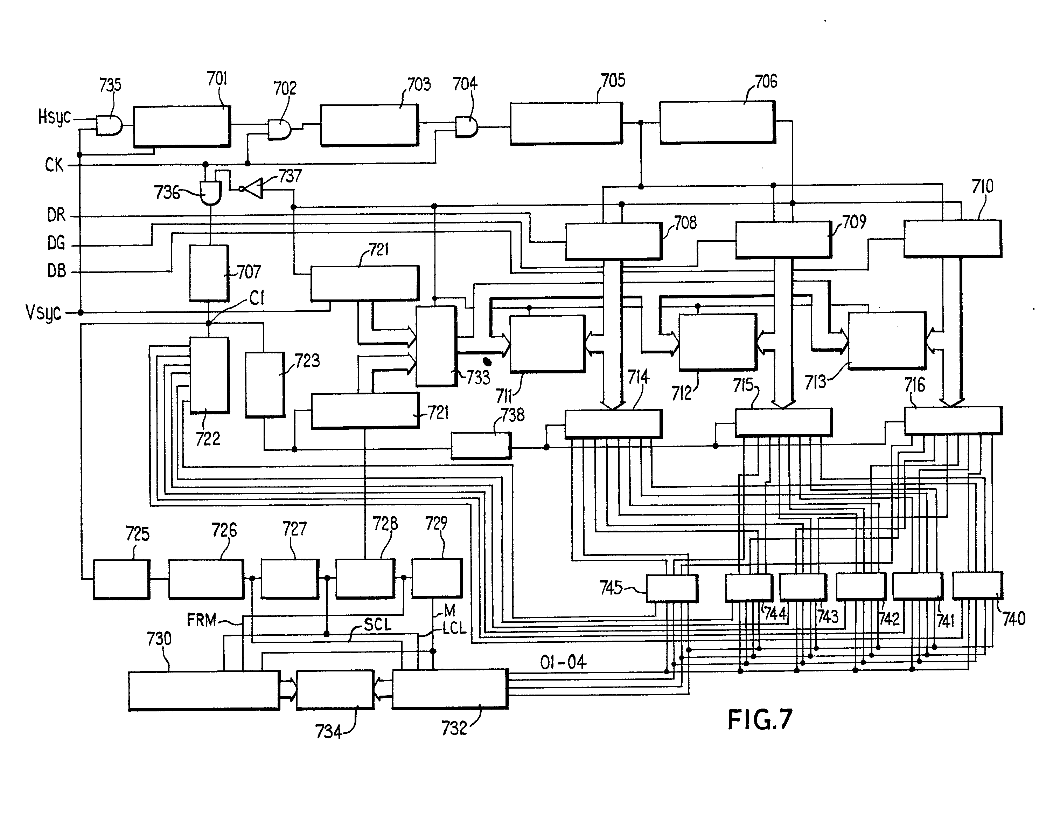

In another modification (Figure 7) of the embodiment of the invention shown in Figure 2, parts with similar functions identified in Figure 2 by reference numerals beginning with the digit 2 are identified in Figure 7 by reference numerals beginning with the digit 7 and having the same final two digits. The ring counter 722, however, is a hexanary ring counter for generating a switching signal in a time sharing manner, and circuits 714, 715 and 716 are latch circuits for temporarily storing the read display data of RAM memories 711, 712 and 713.

Each of the latch circuits 714, 715 and 716 has eight parallel outputs to six switch circuits 740, 741, 742, 743, 744 and 745. Each of the switch circuits 740 to 745 has four inputs, one from each latch circuit and one extra from one of them. Thus, for example, switch circuit 745 receives the first outputs from latch circuits 714, 715 and 716 and the second output from latch circuit 714. Switch circuit 744 receives the second outputs from latch circuits 715 and 716 and the third outputs from latch circuits 714 and 715. Each switch circuit receives one of the outputs of the hexanary ring counter 722 and the switch circuits are operative to input the display data of the latch circuits 714, 715 and 716 from the lowermost bit and the red, green and blue data as the mixed colour display data to switch them in a time sharing manner. Thus they function to make conversions into the mixed colour display data like the conversion circuits 214, 215 and 216, AND gates 217, 218 and 219 and OR gate 220 of the selection gate circuit, the conversion circuit 232 and the ring counter 222 shown in Figure 2.

In addition, the output of the eighth divider 723 (corresponding to divider 223 in Figure 2) is delayed in a delay circuit 738 before supply to the latch circuits 714, 715 and 716. Also, the latch signal from the latch pulse generation circuit 706 is inverted in an inverter 737 to become one input of an AND gate 736 whose other input is the clock signal CK and whose output is to the divider 707. Thus when a latch signal from circuit 706 occurs the clock signal is not passed to the divider 707.

In Figure 7 AND gate 735 is provided for purpose of carrying out only necessary horizontal sync signals for display. Hsyc is inputted to the Y-axis display area control circuit 701 only when Vsyc is in a state of "H".

The delay 738 is provided for purpose of delaying the output pulse of the 1/8 counter 723 and giving the delayed pulse to the latch circuits 714, 715 and 716 as a latch signal. The pulse signals of the 1/8 counter 723 are counted by the read address counter 721. The display data of RAMs 711, 712, 713 is addressed by the output of the ead address counter 721. The addressed display data is inputted to the latch circuits 714, 715 and 716. It is necessary to latch the addressed display data when the data is in a stable state from a shifting state. The delay 738 delays the latch timing, so that the latch signal is given to the latch circuits when the display data is in a stable state.

The inverter 737 is provided for purpose of prohibiting the output of the clock signal CK through the AND gate 736 when a latch pulse is inputted into the write address counter 721. When the latch pulse signal is inputted into the write address counter 721, that is while the signal is in "H" state, the output of the inverter 737 becomes "L" state, so that the AND gate 736 blocks the clock signal CK.

Consequently, it is possible to control the timing for addressing one of the write address counter and the read address counter.

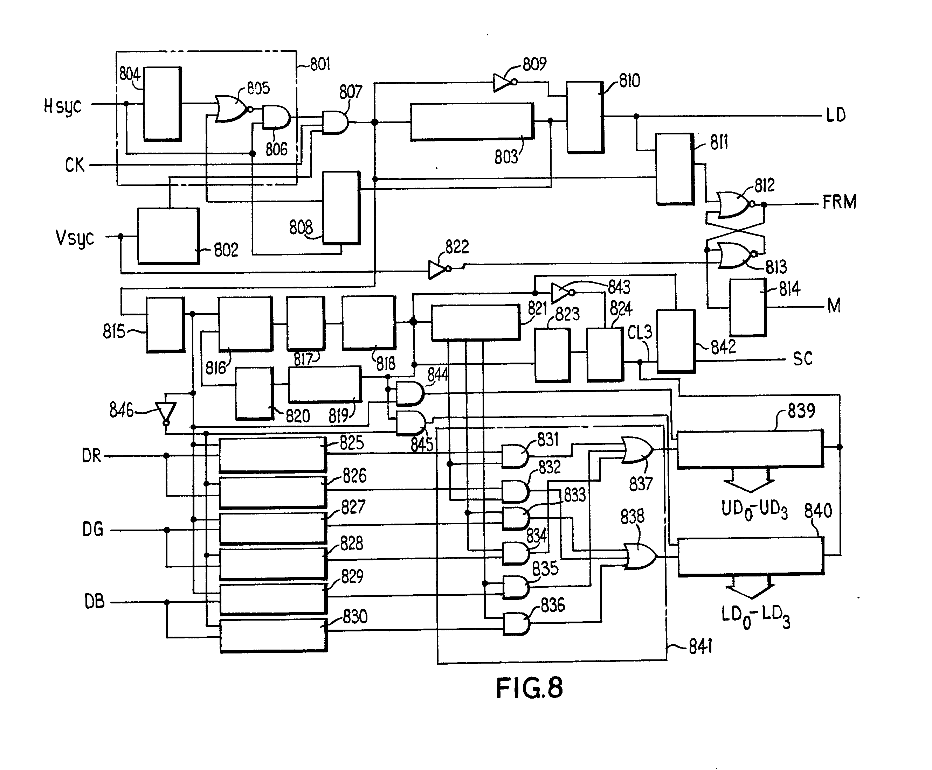

In another embodiment of the invention illustrated in Figure 8, an X-axis home position regulating or display area control circuit 801 is a circuit for receiving the horizontal synchronization signal Hsyc to provide a predetermined delay time thereby to take a timing with the colour display data . The circuit 801 includes a monostable multivibrator 804 whose output falls from "1" to "0" level in a delay time CR determined by a capacitor and a variable resistor. The output of the multivibrator 804 is to a NOR gate 805 whose other input is from a flip-flop circuit 808 set by the signal Hsyc. The output of the NOR gate 805 is ANDed with the signal Hsyc in AND gate 806 to provide the output of the circuit 801. Thus the circuit 801 inputs a signal of "1" level to AND gate 807 with a delay time CR after the horizontal synchronisation signal Hsyc is received. A Y-axis home position regulating or display area control circuit 802 for receiving the vertical synchronization signal Vsyc to provide a predetermined delay time from the timing of the signal Vsyc thereby to take a timing with the display data and is similar in construction to the circuit 801. The output of the circuit 802 is to the AND gate 807 whose third input is a clock signal CK. The output of the AND gate 807 is to a variable dot counter 803 for counting the number of the clock signals CK to count the number of the horizontal dot clocks. The output of AND gate 807 is also to flip-flop circuit 815 which is a circuit for dividing the frequency of the clock signal CK output of the AND gate 807. The output of the flip-flop circuit 815 is one input of a phase comparator 816 whose output is to an integrator 817 whose output is a voltage controlled oscillator 818 whose output is to a one third counter 819 whose output is to a flip-flop circuit 820 whose output is the other input of the comparator 816. The phase comparator 816, integrator 817, voltage controlled oscillator 818, third counter 819 and flip-flop circuit 820 together constitute a PLL circuit to generate a signal from the oscillator 818 having a frequency three times as high as that of the clock signal CK of the AND gate 807. The oscillating signal of the PLL circuit is input to a ternary ring counter circuit 821 for outputting the control signals to a colour data separator circuit 841. The colour data separator 841 comprises AND gates 831 to 836 and OR gates 837 and 838 and is operative to effect separation of the colour data to upper and lower electrodes. Each of the three outputs of the counter 821 is input to a pair of the AND gates 831 and 832, 833 and 834 or 835 and 836. The other inputs to the AND gates come from RAM memories 825, 826, 827, 828, 829 and 830. The RAM memories store colour display data DR, DG and DB, pairs of memories being connected to individual data input lines. The output of flip-flop circuit 815 is input to RAM memories 825, 827 and 829 and, through an inverter 846, to RAM memories 826, 828 and 830. The outputs of AND gates 831, 834 and 835 are to OR gate 837 and the outputs of AND gates 832, 833 and 836 are to OR gate 838. The serial outputs of OR gates 837 and 838 are to serial-to-parallel conversion circuits 839 and 840, respectively, to output colour separated data to the upper and lower electrode driving circuits of a liquid crystal display.

The output of the oscillator 818 is input to two AND gates 844 and 845 whose other inputs are respectively the output and the inverted output of the flip-flop circuit 815. The outputs of the AND gates 844 and 845 are input as shift clock signals to the converters 839 and 840, respectively. The output of the oscillator 818 is also input to a quarter counter 823 whose carry signal is output as a latch signal CL3 through a delay circuit 824. The latch signal CL3 is supplied to the converters 839 and 840. The latch signal CL3 is also input to a delay circuit 842 which also receives the output of the oscillator 818 and which provides a shift clock signal SC to the X-axis electrode driving circuits of the liquid crystal display. The output of the oscillator 818 is also inverted by an inverter 843 and the inverted output supplied to the delay circuit 824.

The clock signal output of the OR gate 807 is inverted by an inverter 809 and the inverted signal supplied to a delay circuit 810 whose other input is the carry signal of the counter 803. The circuit 810 includes a D-type flip-flop circuit to output a latch signal LD as the data latch signal of one line to the liquid crystal driver.The latch signal LD is also input to a delay circuit 811 which comprises a D-type flip-flop circuit and of which the other input is the output of OR gate 807. The output of the delay circuit 811 is one input of a NOR circuit 812 whose other input is the output of a NOR circuit 813. The output of the NOR circuit 812 is a signal FRM for supply to the Y-axis electrode driver for the liquid crystal display, and is also one input of the NOR circuit 813 and of a flip-flop circuit 814 whose output is an AC-conversion signal M to the drivers of the liquid crystal display. The other input of the NOR circuit 813 is the inverted Vsyc signal from an inverter 822.

When the horizontal synchronizing signal Hsyc is input to the monostable multivibrator 804 of the circuit 801, the output of the monostable multivibrator 804 falls to the "O" level with a delay time CR. Because the flip-flop circuit 808 is set by the signal Hsyc, the output of the NOR circuit 805 rises to the "1" level. The circuit 802 inputs the value "1" to AND gate 807 with a delay time after it receives the vertical synchronizing signal Vsyc.

As a result, the AND gate 807 outputs the clock signal CK after the outputs of the circuits 801 and 802 become coincident at the "1" level. If the count value of the variable dot counter 803 is set at six hundred and forty, the carry signal $CL_1$ is generated by the 640th clock signal CK. This carry signal $CL_1$ sets the output of the flip-flop circuit 808 at "1" so that the AND gate 807 interrupts the output of the clock signal CK.

The clock signal CK from the AND gate 807 is input to the flip-flop circuit 815 so that it has its frequency divided into a square wave signal having a duty ratio of 1 : 1 and is input to the phase comparator 816. The phase comparator 816 compares the phases of the flip-flop circuits 815 and 820 and its output is integrated by the integrator 817. The integrated voltage is output to the voltage controlled oscillator 818 so that an oscillating signal CL2 proportional to the integrated voltage is generated. The one third counter 819 divides the frequency of the oscillating signal of the voltage-controlled oscillator 818 by three, and this divided signal is further divided into a square wave signal having a duty ratio of 1 : 1 and input to the phase comparator 816 in which it is compared again with the output of the flip-flop circuit 815. Because the PLL circuit operates in this manner, the voltage-controlled oscillator 818 outputs to the ring counter 821 a signal oscillating with a frequency three times as high as that of the clock signal CK.

Red, green and blue video signals DR, DG and DB are stored in the RAM memories 825 to 830. These memories 825 to 830 are constructed of shift registers, and the shift clock signal makes use of the output of the flip-flop circuit 815, so that the data are shifted alternately in the memories for each one clock signal. More specifically, the display data DR, DG and DB are shifted and stored at odd clock signals in the memories 825, 827 and 829 and at even clock signals in the memories 826, 828 and 830. The shifted output data of the memories 825, 827 and 829 are input to the AND gates 831, 833 and 835 of the colour data separator 841. Because the other inputs of the AND gates 831, 833 and 835 are the individual output signals of the ring counter 821, the data of the memories 825, 827 and 829 are input to the converters 839, 840, and 839, respectively, in a time sharing manner. Next, the data of the memories 826, 828 and 830, which are stored at the even clock signals are likewise input to the converters 840, 839 and 840, respectively, in a time sharing manner. The converters 839 and 840 receive as the respective shift clock signals outputs of AND gates 844 and 845. The converters 839 and 840 are latched by the latch signal $CL_3$ which is delayed by the delay circuit 824 from the output $CL_2$ of the voltage-controlled oscillator 818 and the carry signal of the quarter counter 823. As a result, the converters 839 and 840 the following colour display data into those for upper and lower electrodes, respectively, to generate outputs $UD_0$ to $UD_3$ and $LD_0$ to $LD_3$. Specifically, the outputs of the converter 839 are [DR (of the terminal $UD_0$), DB(of $UD_1$), DG(of $UD_2$), DR(of $UD_3$), DB(of $UD_0$), DG(of $UD_1$), - - -, and so on]. On the other hand, the outputs of the converter 840 are [DG(of the terminal $LD_0$), DR(of $LD_1$), DB(of $LD_2$), DG(of

$LD_3$), DR(of $LD_0$), DB(of $LD_1$), - - -, and so on]. Thus, the outputs are simultaneously generated for the upper and lower electrodes regularly in the orders of red, blue, green, red, - - -, and so on for the upper ones and green, red, blue, green, - - -, and so on for the lower ones. The aforementioned data $UD_0$ to $UD_3$ and $LD_0$ to $LD_3$ output to the colour liquid crystal display, are output as the data shift clock signals of the liquid crystal driver by the shift clock SC delayed from the latch signal $CL_3$ by the delay circuit 842.

The carry signal $CL_1$ of the counter 803 is delayed by the delay circuit 810 to output the latch signal LD as the data latch signal of one line to the liquid crystal driver.

When the vertical synchronizing signal Vsyc or the data for starting the drive of the first scanning line is inputted, it is input to the NOR circuit 813 so that the output FRM of the NOR circuit 812 is set at "1". The latch signal LD of the liquid crystal driver is delayed by a half period of the clock signal by the delay circuit 811 and is input to the NOR circuit 812 to reset the output of the NOR circuit 812 at "0".

The output signal FRM of that NOR circuit 812 is output as the frame signal for starting the common side scanning of the liquid crystal driver to the liquid crystal. The output signal FRM also has its frequency divided by the flip-flop circuit 814 to output the AC drive control signal M for inverting the polarity to alternate the liquid crystal drive voltage for each time.

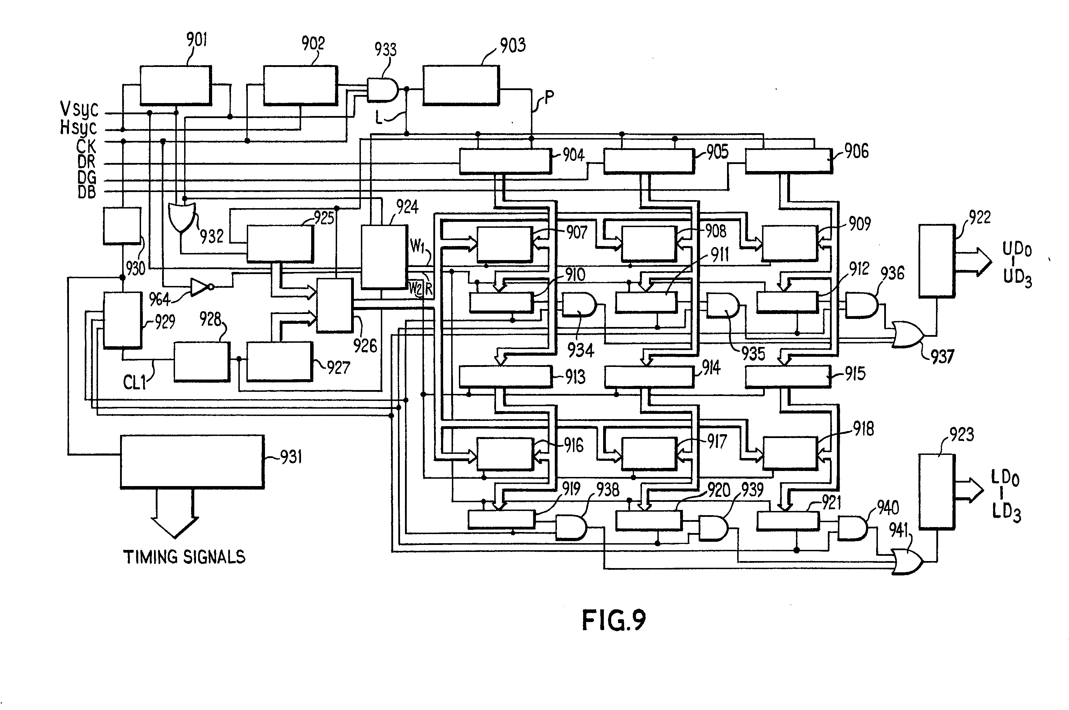

In a further embodiment of the present invention, illustrated in Figure 9, a latch pulse generator 903 generates one shot of latch pulses P for each pulse L from the output of an AND gate 933. The inputs to the AND gate 933 are the outputs of an X-axis home position regulating or display area control circuit 902 and a Y-axis home position regulating or display area control circuit 901, and a clock signal CK. The circuit 902 receives the clock signal CK and the horizontal synchronisation pulse Hsyc. The circuit 901 receives the pulse Hsyc and the vertical synchronisation pulse Vsyc. The circuit 901 also has an output to an OR gate 932 whose other input is the pulse Vsyc. Serial-to-parallel converters 904, 905 and 906 receive pulses L and P and convert incoming red, green and blue video data DR, DG and DB into parallel signals. RAM memories 907, 908 and 909 receive and store the video data from the converters 904, 905 and 906. Parallel-to-serial converters 910, 911 and 912 convert parallel data read from the RAM memories 907, 908 and 909 into serial data. AND gates 934, 935 and 936 and OR gate 937 form a selection gate circuit to extract the serial data in order. A serial-to-parallel converter 922 converts serial data from the OR gate 937 into parallel data to send parallel outputs $UD_0$ to $UD_3$ to upper electrode driver circuit for a liquid crystal display. Switching circuits 913, 914 and 915 open and close the bus lines of the parallel data from the converters 904, 905 and 906 to transfer them to RAM memories 916, 917 and 918. Parallel-to-serial converters 919, 920 and 921 convert parallel data read out from the RAM memories into serial data. AND gates 938, 939 and 940 and OR gate 941 form a selection gate circuit to extract the serial data in order. A serial-to-parallel converter 923 converts the serial data from OR gate 941 into parallel display data outputs $LD_0$ to $LD_3$ for transfer to the driver circuit of the lower electrodes of the liquid crystal panel.

The clock signals CK are also supplied to a divider circuit 930 whose output is to a ternary ring counter 929 and to a timing signal generator 931. The ring counter 929 sends selected pulses sequentially to pairs of converters 910 and 919, 911 and 920, and 912 and 921. The counter 929 also outputs pulses $CL_1$ whose frequency is one third that of the input pulses from circuit 930. The pulses $CL_1$ are fed to a one-ninth counter 928 which conducts a frequency division to generate a carry signal fed to a read address counter 927 and to a control circuit 924, thereby to generate the read pulses of the data from the RAM memories 907, 908, 909, 916, 917 and 918. The read address counter 927 counts the number of read addresses and has a parallel output to a selection circuit 926. A write address counter 925 receives input from the OR gate 932 and the latch pulse P and operates to count the number of write addresses, having a parallel output to the selection circuit 926. The selection circuit 926 also receives the latch pulse P and operates to select either the write or read address to pass on to the RAM memories. The control circuit 924 receives input from the circuit 901, the Vsyc signal, clock signals CK inverted by an inverter 964, the signal L from AND gate 933, and the carry signal from the counter 928. The control circuit 924 operates to provide either a READ signal R to the converters 910, 911, 912, 919, 920 and 921, an UPPER WRITE signal $W_1$ to the RAM memories 907, 908 and 909, or a LOWER WRITE signal $W_2$ to the RAM memories 916, 917, and 918 and the switching circuits 913, 914 and 915. This controls the write in and read from the RAM memories 907, 908, 909, 916, 917 and 918. The liquid crystal panel timing signal generator 931 generates a timing signal necessary for sending data to the liquid crystal drivers to drive the liquid crystal.

In operation, the output of the circuit 901, the circuit 902 and the AND gate 933 made receptive by the clock signal CK is the clock signal L for transferring the video data in the effective display area. The latch pulse generator 903 counts the number of the video transfer clock signals L. The video signals DR, DG and DB are input to the shift registers of the converters 904, 905 and 906, respectively, and the video transfer clock signals L are input as the shift clocks. When eight shots of video transfer clock signals L have been input, a latch pulse P is generated and the contents of the converters 904, 905 and 906 stored in the RAM memories 907, 908, and 909 or the RAM memories 916, 917 and 918. The latch pulses P are input to the write address counter 925 to increment the addresses and simultaneously to the selection circuit 926 to switch the channel in a manner to select the write address so that the upper half RAM memories 907, 908 and 909, or the lower half RAM memories 916, 917 and 918 are used for storage by output of the write signal $W_1$ or $W_2$ from the control circuit 924.

In the reading operation, the clock signal CK has its frequency divided by the frequency divider 930 and is input to the ternary ring counter 929 whose sequential pulses are applied to pairs of converters and AND gates 910, 919, 934 and 938, 911, 920, 935 and 939 and 912, 921, 936 and 940, respectively, so as to extract serial red, green and blue data DR, DG and DB sequentially from the selection gates in a time sharing manner. The output pulses $CL_1$ from the ring counter 929 feed the counter 928 which outputs a carry signal each time the nine output pulses M are counted. This carry signal incements the address of the read address counter 927 and is simultaneously input to the control circuit 924 to output the read signal R. The data at the address in the RAM memories 907, 908 and 909 and the RAM memories 916, 917 and 918 are transferred to the converters 910, 911 and 912 and the converters 919, 920 and 921 in response to the read signal R. Because the converters 910, 911, 912, 919, 920 and 921 are constructed of latch circuits and 8-bit shift registers, each bit is extracted from the selection gate circuits 934, 935, 936 and 937, and 938, 939, 940 and 941 in response to the sequential outputs of the ternary ring counter 929. As a result, the outputs of the OR circuits 937 and 941 are output in series as mixed red, green and blue colour data.

These serial output data are input to the converters 922 and 923, respectively, so as to reduce the speed of transfer to the liquid crystal display driver so that they are converted into parallel signals and are outputted as the upper half display data $UD_0$ to $UD_3$ and the lower half display data $LD_0$ to $LD_3$.

Timing signals similar to those derived in the embodiment of Figure 2, such as the data transfer or shift clock signal $S_{CL}$ to the liquid crystal panel driver, the frame signal FRM, the data latch signal $L_{CL}$ or the polarity change signal M, are the output of the liquid crystal panel timing generator 931 driven by the frequency divider 930.

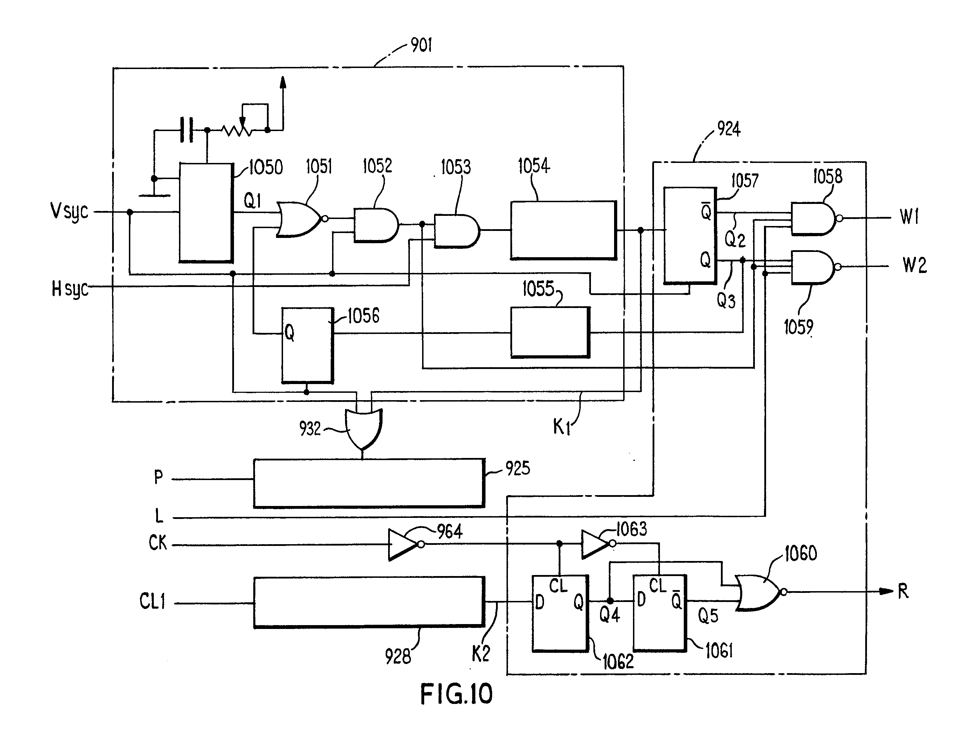

In a particular embodiment (Figure 10) of part of the circuit of Figure 9, the circuit 901 includes a monostable multivibrator 1050 which receives the vertical synchronisation signal Vsyc. The output $Q_1$ of the multivibrator 1050 is to a NOR gate 1051, whose other input is the output of a flip-flop circuit 1056 and whose output is an AND gate 1052 whose other input is the signal Vsyc. The output of the AND gate 1052 is to one input of AND gate 1053 whose other input is the horizontal synchronisation signal Hsyc. The output of the AND gate 1052 is also to the control circuit 924. The output of the AND gate 1053 is to a variable counter 1054 which counts incoming Hsyc signals. The output signal $K_1$ of the counter 1054 is through OR gate 932 to reset the write address counter 925 and to a flip-flop circuit 1057 of the control circuit 924. The flip-flop circuit 1057 also receives the Vsyc signal and has two alternative outputs $Q_2$ and $Q_3$ to NAND gates 1058 and 1059, respectively. The output $Q_3$ is fed back through a wave shaping circuit 1055 to the flip-flop circuit 1056 which also receives the Vsyc signal. The other inputs to NAND gates 1058 and 1059 are the output from the AND gate 1052 and the clock signal L.

The control circuit 924 also includes a D-type flip-flop circuit 1062 which receives the output $K_2$ of

the counter 928 and is clocked by the output of the inverter 964. The output $Q_4$ of the circuit 1062 is to another D-type flip-flop circuit 1061 which is clocked by the output of an inverter 1063 driven by the output of the inverter 964. The outputs $Q_4$ and $Q_5$ of the circuits 1062 and 1061 form the inputs to a NOR gate 1060 whose output is the READ signal R. The outputs of the NAND gates 1058 and 1059 are the UPPER WRITE and LOWER WRITE signals $W_1$ and $W_2$, respectively.

In operation, in response to the input of a vertical synchronization signal Vsyc the output $Q_1$ of the multivibrator 1050 falls with a predetermined delay time. As a result, the output of the NOR gate 1051 rises to "1" after the delay time so that the AND gate 1053 outputs the horizontal synchronization signal Hsyc.

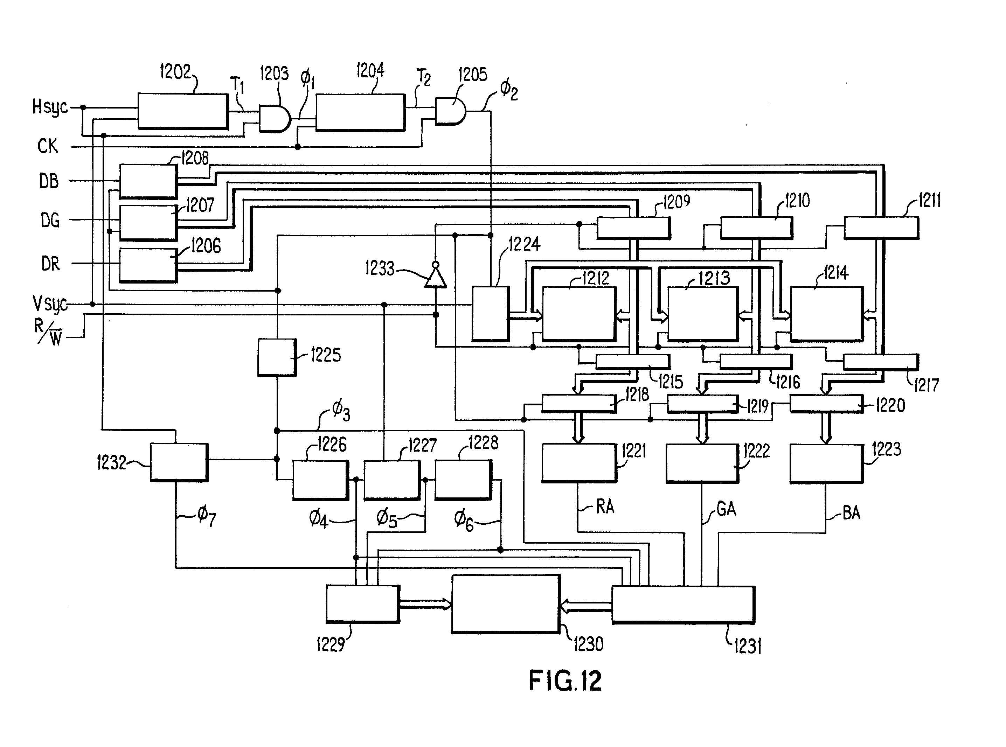

The variable counter 1054 counts the horizontal synchronization signals Hsyc. If the number of the scanning lines of the CRT interface signal is four hundred, the count value is set at two hundred. As a result, in the case of two hundred shots or less of horizontal synchronization signals, the output $Q_2$ of the flip-flop circuit 1057 is at the "1" level so that the NAND gate 1058 outputs the write signal $W_1$ to the RAM memories 907, 908 and 909 to store the upper half video data. When the horizontal synchronization signals Hsyc exceed two hundred shots, the output $Q_3$ of the flip-flop circuit 1057 takes the "1" level, so that the write signal $W_2$ is output to the RAM memories 916, 917 and 918, and the lower half video data are stored. The output $K_1$ of the variable counter 1054 resets the write address counter 925 for every two hundred counts. As a result, when the RAM memories 907, 908, 909, 916, 917 and 918 are read, the video data of the same address can be read out. In operation, to read out the video data, the output $K_2$ of the counter 928 is the carry signal for each ninth shot of the output $CL_1$ of the ternary ring counter 929. This output $K_2$ is fed through the two-stage D-type flip-flop circuits 1062 and 1961, so that the NOR gate 1060 issues a READ signal R. Because the flip-flop circuits 1061 and 1062 are controlled by the clock signals CK, the output of the NOR gate 1060 can be used as the READ signal without the same timing arrangements as the WRITE signals $W_1$ and $W_2$, as will be seen from the timing chart of Figure 11.

In a further embodiment of a video interface circuit (Figure 12) which may be applied to a liquid crystal display to enable a graded colour video display, a Y-axis display area control circuit 1202 counts the number of the horizontal synchronization signals Hsyc to determine the display area in the Y-axis direction. An X-axis display area control circuit 1204 counts the number of clock signals CK to determine the display area in the X-axis direction. Analog-to-digital converter circuits 1206, 1207 and 1208 convert the analog voltages of the red, green and blue video signals into digital values. Switch circuits 1209, 1210 and 1211 switch the digital outputs of the circuits 1206 to 1208 to RAM memories 1212, 1213 and 1214, respectively. These RAM memories 1212 to 1214 store the outputs of the circuits 1209 to 1211. An address counter 1224 counts up the addresses of the RAM memories 1212 to 1214, receiving the output $\varphi_2$ of an AND gate 1205 whose inputs are the output T2 of circuit 1204 and clock signal CK. Switch circuits 1215, 1216 and 1217 input the stored data of the RAM memories 1212 to 1214 to latch circuits 1218, 1219 and 1220, respectively. Digital-to-analog converter circuits 1221, 1222 and 1223 convert the digital values of the latch circuits 1218 to 1220 into analog voltages. An X-axis electrode driver circuit 1231 drives the X-axis electrodes of a colour liquid crystal display panel 1230. A delay circuit 1225 receives the dot clock output $\varphi_2$ of the AND gate 1205 and outputs a delayed dot clock $\varphi_3$. A hold clock generator circuit 1226 receives the clock $\varphi_3$ and generate a shift clock $\varphi_4$ for a shift register to shift the scanning data stored in a Y-axis electrode drive circuit 1229 and for a shift register in the X-axis electrode driver circuit 1231. A frame signal generator circuit 1227 is a circuit receiving the output $\varphi_4$ of the circuit 1226 and under the control of the Vsyc signal generating an output $\varphi_5$ to cause the Y-axis electrode drive circuits 1229 to generate a signal to start the scan. An AC-converting signal generator circuit 1228 receives the output $\varphi_5$ of the circuit 1227 and generates a polarity switching signal $\varphi_6$ for the driver circuits to drive the liquid crystal with an AC current.

The output of the circuit 1202 is to an AND gate 1203 whose other input is Hsyc signal and whose output is the circuit 1204. Clock signal CK is also input to the circuit 1204. The output $\varphi_2$ of the AND gate 1205 is fed to the analog-to-digital converters 1206, 1207 and 1208. A control signal $R/\bar{W}$ is supplied to the RAM memories 1212, 1213 and 1214, and to the switch circuits 1215, 1216 and 1217. The signal $R/\bar{W}$ is inverted by an inverter 1233 and the inverted signal supplied to the switch circuits 1209, 1210 and 1211. The output $\varphi_3$ of the delay circuit 1225 is input to a shift data generator 1232 which also receives Hsyc signals and outputs shift clock signals $\varphi_7$ to the X-axis electrode driver 1231.

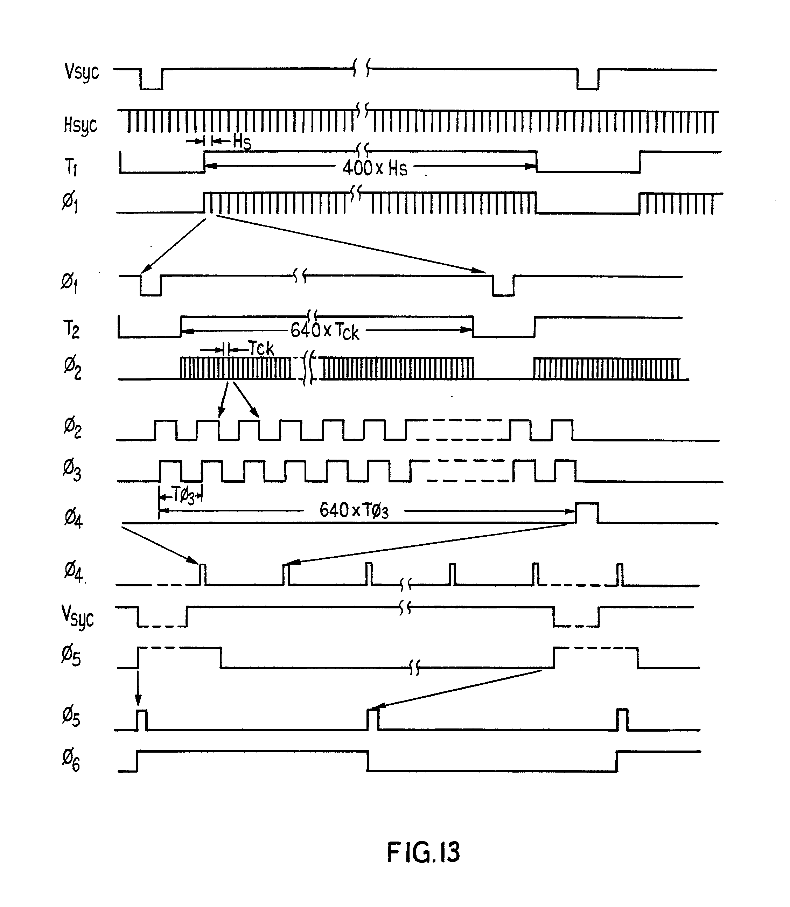

The Y-axis display area control circuit 1202 sets the effective display period in the Y-axis direction and has built in a counter for counting the vertical fly-back period and a counter for counting the number of the horizontal synchronization signals Hsyc for an effective display area period. The vertical synchronization signal Vsyc is input as a clock input to the Y-axis display area control circuit 1202. The output $T_1$ (Figure 13) of the Y-axis display area control circuit 1202 becomes an output signal at an "H" level for the period (e.g. 400 × Hs) of the effective display area in the Y-axis direction, namely four hundred Hsyc signals.

As a result, the output $\varphi_1$ of an AND gate 1203 inputs the horizontal synchronization signal Hsyc for the period of the effective display area in the Y-axis direction to the X-axis display area control circuit 1204. This X-axis display area control circuit 1204 is of similar construction to that of the Y-axis display area control circuit 1202 and has built in a counter for counting the horizontal fly-back period, after the horizontal synchronization signal Hsyc has been input, and a counter for counting the number of the dot clocks CK. For clarity, the lower line of the output

$\varphi_1$ in Figure 13 has a longer time base than the upper line. The output $T_2$ of the X-axis display area control circuit 1204 becomes an output signal at the "H" level for the period (e.g., 640 × Tck) of the effective display area in the X-axis direction, as shown in Figure 13. As a result, an AND circuit 1205 outputs a dot clock signal $\varphi_2$ during the period of the effective display area. The analog voltages of the red, green and blue video signals DR, DG and DB have their peak voltage values converted into digital signals by the A/D converter circuits 1206, 1207 and 1208 respectively, and are input to the switch circuits 1209, 1210 and 1211.

The A/D converter circuits 1206 to 1208 are sampled and held by the dot clocks $\varphi_2$.

The display data of the switch circuits 1209 to 1211 are simultaneously written when the control signal $R/\overline{W}$ for the RAM memories 1212, 1213 and 1214 is at an "L" level. The addresses of the RAM memories 1212 to 1214 are accessed by the address counter 1224 which uses the dot clocks $\varphi_2$ as its clock input and the vertical synchronizing signal Vsyc as its reset signal.

During the reading operation, the control signal $R/\overline{W}$ for the RAM memories 1212 to 1214 is at the "H" level, the stored display data are read out from the RAM memories 1212 to 1214 and are latched through the switch circuits 1215 to 1217 by the latch circuits 1218 to 1220. The latched outputs of these latch circuits 1218 to 1220 are input to the D/A converter circuits 1221 to 1223, respectively, to convert the digital values into analog voltages RA, GA and BA which are output to the X-axis electrode drive circuit 1231.

For clarity, the lower line of $\varphi_2$ in Figure 13 has a longer time base than the upper. The dot clock $\varphi_2$ is delayed by the delay circuit 1225 and output $\varphi_3$ applied to generator circuit 1232 to provide the output $\varphi_7$ as a shift clock for the shift register built in the X-axis electrode drive circuit 1231. The dot clock $\varphi_3$ is input to the hold clock generator circuit 1226 to generate the hold signal $\varphi_4$ of the data after six hundred and forty clocks $\varphi_3$ for one horizontal synchronization signal Hsyc period thereby to hold the analog voltages. The hold signal $\varphi_4$ is output, as a shift clock for shift registers built in the Y-axis and X-axis electrode drive circuits 1229 and 1231. For clarity, the lower line of $\varphi_4$ in Figure 13 has a shorter time base than the upper. A frame signal $\varphi_5$ from the frame signal generator circuit 1227 is output as data for starting the scan of the Y-axis electrode drive circuit 1229, being synchronized by the vertical synchronization signal Vsyc. The frame signal generator circuit 1227 raises the frame signal $\varphi_5$ to the "H" level in response to the vertical synchronization signal Vsyc and resets the signal $\varphi_5$ at the "L" level after the first fall of the next hold signal $\varphi_4$. For clarity, the lower line of $\varphi_5$ in Figure 13 has a longer timebase than the upper. The output $\varphi_6$ of a flip-flop circuit of the AC-converting signal generator circuit 1228 switches the drive voltages of the X-axis electrode drive circuit 1231 and of the Y-axis electrode drive circuit 1229, so that the polarity of the liquid crystal driving voltage is inverted for each frame of the frame signal $\varphi_5$.

The shift data generator circuit generates a pulse signal $\varphi_7$ for generating data at the first stage of the shift register built in the X-axis electrode drive circuit 1231 and has a construction similar to that of the frame signal generator circuit 1227, so that it raises the pulse signal $\varphi_7$ to the "H" level in response to the horizontal synchronization signal Hsyc and then resets it at the "L" level after the first fall of the dot clock $\varphi_3$.

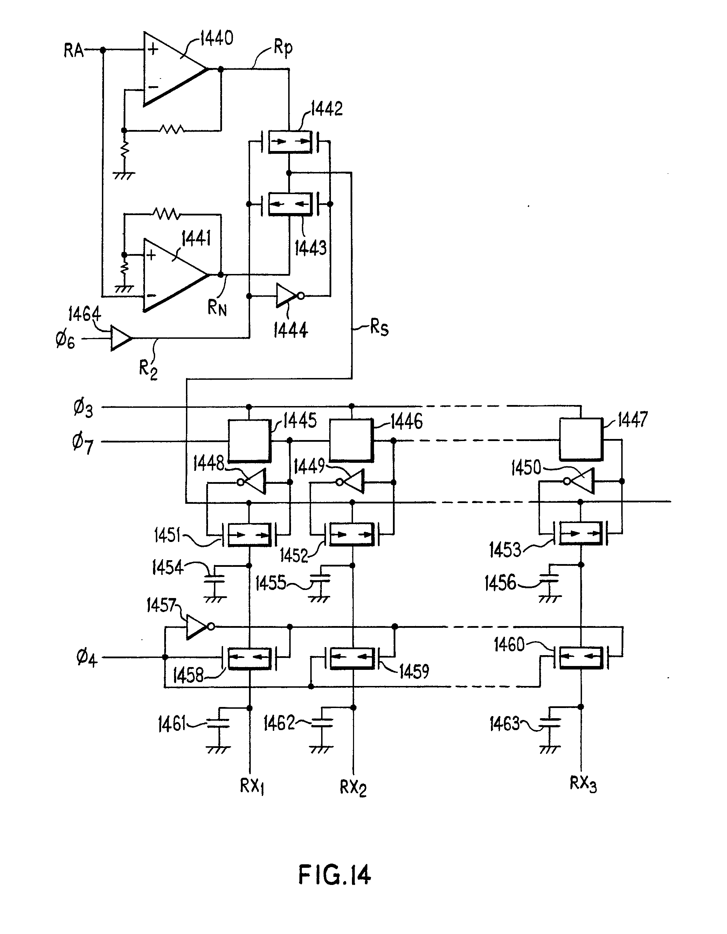

In a particular embodiment (Figure 14) of part of the X-axis electrode drive circuit to be used in the colour liquid crystal display of the present invention, the output signal RA of the converter circuit 1221 provides the analog signal of the red video signal.

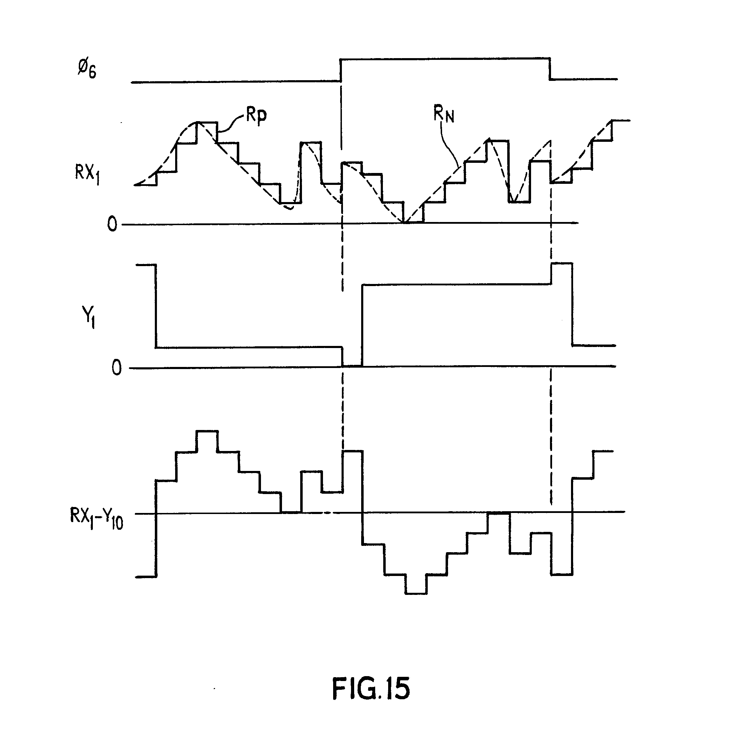

The analog signal of the video signal is amplified by operational amplifier 1440 and inverse operational amplifier 1441 to generate a normally amplified signal Rpand an inversely amplified signal $R_N$. The video signals of these amplified signals $R_P$ and $R_N$ are input to transmission gates 1442 and 1443 in the form of analog switch circuits. The AC polarity switching signal $\varphi_6$ is passed by a level shift circuit 1464 and supplied as signal $R_2$ to the one sides of the transmission gates 1442 and 1443. This signal $R_2$ is inverted by inverter 1444 and supplied to the other sides of the transmission gates 1442 and 1443. Thus the output $R_S$ of the transmission gates 1442 and 1443 is switched for each frame by the AC signal $\varphi_6$. The outputs $R_S$ of the transmission gates 1442 and 1443 is input to analog switch circuits 1451 to 1453. Shift register cells 1445 to 1447 receive dot clocks $\varphi_3$ as shift clocks to shift shift data $\varphi_7$ from the generator 1232 through the shift register. The one sides of the analog switching circuits 1451 to 1453 receive the outputs of respective shift register cells 1445 to 1447, the other sides receiving the inverted outputs through inverters 1448 to 1450. The gate signals of the switch circuits 1451 to 1453 are caused to turn on the switch circuits 1451 to 1453 at each dot clock $\varphi_3$ by the shift register cells 1445 to 1447, which use the shift data $\varphi_7$ as their data and the dot clocks $\varphi_3$ as their shift clocks, sequentially to hold the analog voltages in capacitor hold circuits 1454 to 1456. When the hold clock $\varphi_4$ is input to the one side gates of analog switch circuits 1458 to 1460, and inverted through inverter 1457 to the other side gates, the circuits 1458 to 1460 are simultaneously turned on to hold the video signals in capacitor hold circuits 1461 to 1463, thereby to drive the X-axis electrodes of the red filter of the liquid crystal panel with those analog signals. The output signals $RX_1$ to $RX_3$ of driver circuits are fed to the X-axis electrodes coloured with red filters (see Figure 3).Similar circuits are provided for the green and blue coloured X-axis electrodes. Because the Y-axis electrode drive circuit may be constructed of the sequential line scanning type of the prior art, the liquid crystal driver circuit according to the voltage averaging method can be used as it is. Figure 15 shows an example of the drive wave forms applied to an X-axis electrode and a Y-axis electrode of a display panel. The drive voltages according to the video signals are applied in an alternating manner by an X-axis drive voltage $RX_1$ and a Y-axis drive voltage $Y_1$ to produce the drive wave form $RX_1 - Y_1$

at the dot formed at the intersection of the respective electrodes.

As has been described hereinbefore, according to the embodiment, the colour video signals are converted into the digital signals and stored in the memory circuits and are then converted into the analog signals for video display. As a result, the video signals can be easily displayed selectively in the form of a moving or still picture. Another outstanding effect is that the large-sized liquid crystal display or the else having been used in nothing but an OA device such as a personal computer or word processor of monochromatic and ON/OFF display can be widely used in place of the video display terminal device such as a computer graphic display or a wall TV set.

**Claims**

1. An interface for video colour display signals to a thin colour display panel, characterised by timing means (101,102,103) for controlling the introduction of effective colour display data (DR,DG,DB) into memory means (105,106,107) according to synchronization signal (Hsyc,Vsyc), the memory means being effective to store the colour display data, colour data treating means (108) for generating desired mixed colour data from stored colour display data, and timing signal generating means (109) to generate timing signals necessary to operate a driver for the thin colour display panel.

2. An interface as claimed in claim 1, characterised in that the timing means comprise an X-axis display area control circuit (101) for controlling a timing so as to introduce horizontal effective colour display data into the memory means, a Y-axis display area control circuit (102) for controlling a timing so as to introduce vertical effective colour display data into the memory means and a pulse generator (103) for generating a pulse when both the horizontal and vertical colour display data are effective.

3. An interface as claimed in claim 1, characterised in that the colour data treating means comprise latching means (714,715,716) for temporarily storing colour display data read out of the memory means (711,712,713) and switching means (740,741,742,743,744,745) for switching the stored colour display data in a time sharing manner to generate the desired mixed colour data.

4. An interface as claimed in claim 3, characterised in that the switching means (740 to 745) are controlled by the outputs of a ring counter (722).

5. An interface as claimed in claim 4, characterised in that there are three latching means (714 to 716) for the respective colour data in 8-bit parallel form, that there are six switching means (740 to 745) receiving one bit from each latching means and one extra bit from one of the latching means, and in that the ring counter (722) is a hexanary ring counter operating each switching means in turn.

6. An interface claimed in claim 1, characterised in that the memory means include serial to parallel conversion circuits (208,209,210) for converting red, blue and green serial data (DR, DG,DB) to corresponding parallel data and memory circuits (211,212,213; 611,612,613) for storing the parallel display data, that the colour data treating means comprise parallel-to-serial conversion circuits (214,215,216; 614,615,616) for converting the stored parallel display data to serial data, that there are provided selection gate circuits (217,218,219,220; 617,618,619,620) for selectively sequentially outputting the serial signals to the parallel-to-serial conversion circuits respectively and a serial-to-parallel conversion circuit (231; 631) for converting the serial signals of the selection gate circuits to parallel signals ($0_1$ to $0_4$).

7. An interface as claimed in claim 6 characterised in that three serial display data of red, blue and green are converted to one serial mixed display data of red, blue and green, then to a parallel signal.

8. An interface as claimed in claim 6 or 7, characterised in that the selection gate circuits (217 to 220; 617 to 620) are controlled by a ring counter (222; 622).

9. An interface as claimed in claim 1, in which the display panel has two dot matrix electrode constructions, characterised by first and second memory means (825 to 830; 907, 908, 909, 916, 917, 918) to store the colour display data, and first and second colour data treating means (841; 910, 911, 912, 934, 935, 936, 937, 919, 920, 921, 938, 939, 940, 941) for generating desired mixed colour data from stored colour display data for driver circuits for the respective electrode constructions.

10. An interface as claimed in claim 9, characterised by a control means (924) for controlling the writing of the first and second memory means by separate write signals (W1, W2).

11. An interface as claimed in claim 1 characterised in that the memory means comprise analog-to-digital converter circuits (1206 to 1208) for converting video display signals of red, green and blue colours into respective digital signals, memory circuits (1212 to 1214) for respectively storing the converted digital display data, and analog-to-digital converter circuits (1221 to 1223) for converting the respective output signals of the memory circuits into analog signals.

12. An interface for video colour display signals to a thin colour display panel with first and second dot matrix electrode constructions, characterised by timing means for controlling the introduction of effective colour display data into memory means according to synchronization signals, the memory means comprising a first memory means for storing the effective colour display data for the first dot matrix electrode construction and a second memory means for storing the effective colour display data for the second dot matrix electrode construction, first and second colour data treating means for generating first and second desired mixed colour data using the stored colour display data, and timing signal generating means to generate timing signals necessary to operate a driver for the thin colour display panel.

13. An interface as claimed in claim 12, wherein the interface circuit includes a control means for controlling the write or read of the first and second memory means, and a selection means for selecting either the write or read address.

14. An interface as claimed in any preceding claim, wherein the thin display panel uses an electro-optical element selected from liquid crystal, EL, plasma and LED.

FIG.1

FIG.2

$R_1$ $G_1$ $B_1$ $R_2$ — — — — $R_n$ $G_n$ $B_n$

$Y_1$

$Y_2$

$Y_3$

$Y_m$

**FIG.3**

$C_1$

$R_{CL}$

$G_{CL}$

$B_{CL}$

$D_1$

R G B R G B R G B R G B R G B R

$D_{SC}$

R G B R G B R G B R G

$C_2$

$O_1$

R G B

$O_2$

G B R

$O_3$

B R G

$O_4$

R G B

**FIG.4**

FIG.5

FIG.11

0236111

FIG.6

FIG.7

FIG.8

FIG.9

FIG.10

FIG.12

**FIG.13**

FIG.14

FIG.15